# EUROPEAN PATENT APPLICATION

(11) **EP 4 422 150 A1**
(43) Date of publication of application: **28.08.2024**
(21) Application number: 21960839.5
(22) Date of filing: 18.10.2021
(51) Int. Cl.: H04L 61/00, H04W 8/28

(54) **DNS CONFIGURATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: SHEN, Yang, Beijing 100085 (CN); LIU, Jianning, Beijing 100085 (CN); QI, Jianfeng, Beijing 100085 (CN)
(74) Representative: Kudlek, Franz Thomas
(86) International application number: PCT/CN2021/124482
(87) International publication number: WO 2023/065078

(57) **Abstract**

A domain name system (DNS) configuration processing method and apparatus, and a communication device and a storage medium. The DNS configuration processing method, which is executed by a user equipment (UE), may comprise: if a UE is not configured with a second DNS configuration which satisfies a preset condition, determining, on the basis of a received first DNS configuration selected by a network device for the UE, a DNS configuration used by the UE.

## Description

### TECHNICAL FIELD

The present disclosure relates to the wireless communication technical field but is not limited to the wireless communication technical field, and in particular, to a Domain Name System (DNS) configuration processing method and apparatus, a communication device and a storage medium.

### BACKGROUND

With the developments of communication technologies and information technologies, in addition to meeting connection needs between people, mobile communication networks also need to address communication needs between people and things and between things and things. In order to meet the need to provide low-latency services, edge computing emerged as the times require. Edge computing supports an operator and a third-party application service to be deployed near an access point of a network where User Equipment (UE) resides in, thereby achieving efficient service delivery through reduced end-to-end latency and load on the transmission network.

Edge computing is a combination of edge infrastructure (s), edge network(s), edge computing platform(s) and an edge application(s). An edge application service may be provided by multiple Edge Application Servers (EASs).

When starting an edge application service, a UE needs to know the Internet Protocol (IP) address(es) of EAS(s). The UE may select an appropriate EAS (such as an EAS closest to the UE) through an Edge Application Server Discovery Function (EASDF), so that a data flow may be routed from local to the EAS, thereby optimizing the service latency and the data routing path and improving user service experience.

EAS discovery is a procedure by which a UE discovers an appropriate EAS IP address through domain name resolution using DNS.

The DNS server may be deployed in different locations of a network as a central DNS (C-DNS) resolver/server, or as a local DNS (L-DNS) resolver/server.

### SUMMARY

Embodiments of the present disclosure provide a DNS configuration processing method and apparatus, a communication device and a storage medium.

According to a first aspect of embodiments of the present disclosure, there is provided a DNS configuration processing method. The method is performed by User Equipment (UE). The method includes:
determining a DNS configuration used by the UE based on a received first DNS configuration which is selected by a network device for the UE, if the UE is not configured with a second DNS configuration which satisfies a preset condition.

According to a second aspect of embodiments of the present disclosure, there is provided a DNS configuration processing method. The method is performed by SMF. The method includes:
determining a second DNS configuration;
sending the second DNS configuration to UE, wherein the second DNS configuration is used for the UE to obtain a DNS service;
receiving feedback information; and
when the feedback information indicates that the UE does not use the second DNS configuration, stopping maintaining of a DNS handling rule corresponding to the second DNS configuration.

According to a third aspect of embodiments of the present disclosure, there is provided a DNS configuration processing method. The method is performed by a base station. The method includes:
receiving feedback information from UE, wherein the feedback information indicates that the UE does not use a second DNS configuration, or the feedback information indicates whether the UE uses the second DNS configuration; and
sending the feedback information to an AMF, wherein the feedback information is used for the AMF to forward to an SMF, and is used for the SMF to determine to stop maintaining a DNS handling rule corresponding to the second DNS configuration.

According to a fourth aspect of embodiments of the present disclosure, there is provided a DNS configuration processing method. The method is performed by AMF. The method includes:
receiving feedback information which is from a UE and is forwarded by a base station; and
sending the feedback information to the AMF, wherein when the feedback information indicates that the UE does not use the second DNS configuration, the feedback information is used for the SMF to determine to stop maintaining a DNS handling rule corresponding to the second DNS configuration.

According to a fifth aspect of embodiments of the present disclosure, there is provided a Domain Name System (DNS) configuration processing apparatus. The apparatus includes:
a first determination module configured to determine a DNS configuration used by a UE based on a received first DNS configuration which is selected by a network device for the UE, if the UE is not configured with a second DNS configuration which satisfies a preset condition.

According to a sixth aspect of embodiments of the present disclosure, there is provided a Domain Name System (DNS) configuration processing apparatus. The apparatus includes:
a second determination module configured to determine a second DNS configuration;
a second sending module configured to send the second DNS configuration to UE, wherein the second DNS configuration is used for the UE to obtain a DNS service;
a second receiving module configured to receive feedback information; and
a stopping module configured to, when the feedback information indicates that the UE does not use the second DNS configuration, stop maintaining of a DNS handling rule corresponding to the second DNS configuration.

According to a seventh aspect of embodiments of the present disclosure, there is provided a DNS configuration processing apparatus. The apparatus includes:
a third receiving module configured to receive feedback information from UE, wherein the feedback information indicates that the UE does not use a second DNS configuration, or the feedback information indicates whether the UE uses the second DNS configuration; and
a third sending module configured to send the feedback information to an AMF, wherein the feedback information is used for the AMF to forward to an SMF, and is used for the SMF to determine to stop maintaining a DNS handling rule corresponding to the second DNS configuration.

According to an eighth aspect of embodiments of the present disclosure, there is provided a DNS configuration processing apparatus. The apparatus includes:
a fourth receiving module configured to receive feedback information which is from a UE and is forwarded by a base station; and
a fourth sending module configured to send the feedback information to the AMF, wherein when the feedback information indicates that the UE does not use the second DNS configuration, the feedback information is used for the SMF to determine to stop maintaining a DNS handling rule corresponding to the second DNS configuration.

According to a ninth aspect of embodiments of the present disclosure, there is provided a communication device, including a processor, a transceiver, a memory and an executable program stored in the memory and capable of being run by the processor, wherein when the processor runs the executable program, the DNS configuration processing method provided by any one of the foregoing first to fourth aspects is implemented.

According to a tenth aspect of embodiments of the present disclosure, there is provided a computer storage medium that stores an executable program; after the executable program is executed by a processor, the DNS configuration processing method provided by any one of the foregoing first to fourth aspects is implemented.

In the technical solutions provided by the embodiments of the present disclosure, after the UE receives the second DNS configuration sent by the network side of the mobile communication network, the UE does not directly determine to use the second DNS configuration, but selects a DNS configuration suitable for the UE according to the second DNS configuration and the first DNS configuration. In this way, the UE has sufficient flexibility to select a DNS configuration suitable for a current application scenario.

It should be understood that the above general description and the following detailed description are only exemplary and explanatory, and are not intended to limit the embodiments of the present disclosure.

### BRIEF DESCRIPTION OF THE DRAWINGS

The accompanying drawings, which are incorporated in and constitute a part of the specification, illustrate embodiments consistent with the present disclosure and together with the description serve to explain principles of embodiments of the present disclosure.
FIG. 1 is a schematic structural diagram of a wireless communication system according to an example embodiment;
FIG. 2 A is a schematic flowchart of a DNS configuration processing method according to an example embodiment;
FIG. 2B is a schematic flowchart of a DNS configuration processing method according to an example embodiment;
FIG. 3 is a schematic flowchart of a DNS configuration processing method according to an example embodiment;
FIG. 4 is a schematic flowchart of a DNS configuration processing method according to an example embodiment;
FIG. 5 is a schematic flowchart of a DNS configuration processing method according to an example embodiment;
FIG. 6 is a schematic flowchart of a DNS configuration processing method according to an example embodiment;
FIG. 7 is a schematic flowchart of PDU session processing according to an example embodiment;
FIG. 8 is a schematic flowchart of a PDU session processing method according to an example embodiment;
FIG. 9A is a schematic structural diagram of a DNS configuration processing apparatus according to an example embodiment;
FIG. 9B is a schematic structural diagram of a DNS configuration processing apparatus according to an example embodiment;
FIG. 10 is a schematic structural diagram of a DNS configuration processing apparatus according to an example embodiment;
FIG. 11 is a schematic structural diagram of a DNS configuration processing apparatus according to an example embodiment;
FIG. 12 is a schematic structural diagram of a DNS configuration processing apparatus according to an example embodiment;
FIG. 13 is a schematic structural diagram of a UE according to an example embodiment;
FIG. 14 is a schematic structural diagram of a communication device according to an example embodiment.

### DETAILED DESCRIPTION

Example embodiments will be described in detail herein, examples of which are illustrated in the accompanying drawings. When the following description refers to the drawings, the same numbers in different drawings refer to the same or similar elements unless otherwise indicated. The implementations described in the following example embodiments do not represent all implementations consistent with embodiments of the invention. Rather, they are merely examples of apparatuses and methods consistent with some aspects of embodiments of the present disclosure as detailed in the appended claims.

The terms used in embodiments of the present disclosure are for the purpose of describing example embodiments only and are not intended to limit the embodiments of the present disclosure. As used in the embodiments of the present disclosure and the appended claims, the singular forms "a", "an" and "the" are intended to include a plural form as well, unless the context clearly dictates otherwise. It will also be understood that the term "and/or" as used herein refers to and includes any and all possible combinations of one or more of associated listed items.

It should be understood that although the terms first, second, third, etc. may be used to describe various information in the embodiments of the present disclosure, the information should not be limited to these terms. These terms are only used to distinguish information of the same type from each other. For example, without departing from the scope of the embodiments of the present disclosure, first information may also be called second information, and similarly, second information may also be called first information. Depending on the context, the word "if' as used herein may be interpreted as "when" or "in a case where..." or "in response to determining... ".

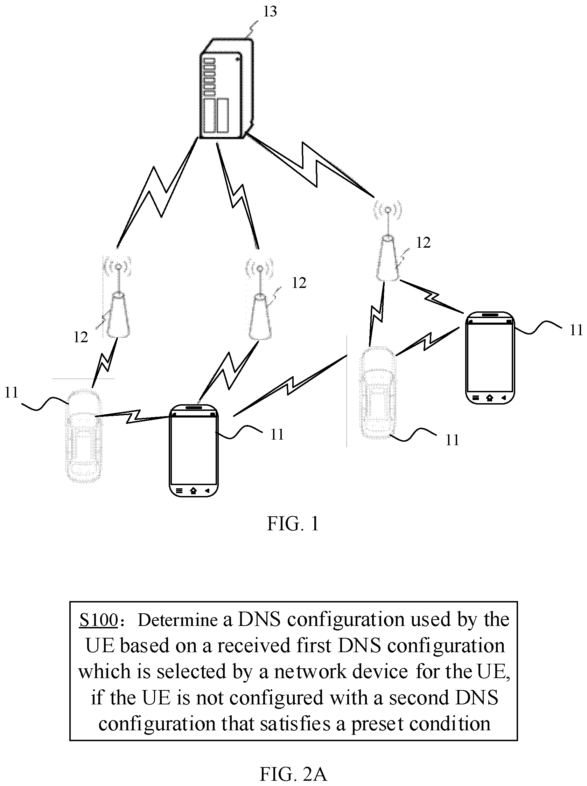

FIG. 1 shows a schematic structural diagram of a wireless communication system provided by an embodiment of the present disclosure. As shown in FIG. 1, the wireless communication system is a communication system based on cellular mobile communication technologies. The wireless communication system may include multiple UEs 11 and multiple access devices 12.

UE 11 may be a device that provides voice and/or data connectivity to a user. The UE 11 may communicate with one or more core networks via a Radio Access Network (RAN). The UE 11 may be an Internet of Things UE, such as a sensor device, a mobile phone (or referred to as a "cellular" phone), and a computer with an Internet of Things UE, for example, it can be a fixed, portable, pocket-sized, handheld, computer-built-in or vehicle-mounted device. For example, the UE 11 may be a station (STA), a subscriber unit, a subscriber station, a mobile station, a mobile, a remote station, an access point, a remote UE (remote terminal), an access UE (access terminal), a user terminal, a user agent, a user device, or user UE (user equipment). Alternatively, the UE 11 may be equipment of an unmanned aerial vehicle. Alternatively, the UE 11 may be a vehicle-mounted device, for example, it may be an on-board computer with a wireless communication function, or a wireless communication device connected to an external on-board computer. Alternatively, the UE 11 may be a roadside device, for example, it may be a streetlight, a signal light or other roadside device with a wireless communication function.

An access device 12 may be a network side device in a wireless communication system. The wireless communication system may be the 4th generation mobile communication (4G) system, also known as the Long Term Evolution (LTE) system; or, the wireless communication system may be a 5G system, also called new radio system or 5G NR system. Alternatively, the wireless communication system may be a next-generation system of the 5G system. The access network in the 5G system may be called New Generation-Radio Access Network (NG-RAN). Or, it may also be a MTC system.

The access device 12 may be an evolved access device (eNB) used in the 4G system. Alternatively, the access device 12 may be an access device (gNB) using a centralized distributed architecture in the 5G system. When the access device 12 adopts a centralized distributed architecture, it usually includes a central unit (CU) and at least two distributed units (DU). The central unit is provided with a protocol stack including a Packet Data Convergence Protocol (PDCP) layer, a Radio Link Control protocol (RLC) layer, and a Media Access Control (MAC) layer; a distributed unit is provided with a physical (PHY) layer protocol stack. The embodiments of the present disclosure do not limit the specific implementation of the access device 12.

A wireless connection may be established between an access device 12 and a UE 11 through a radio air interface. In different implementations, the radio air interface is a radio air interface based on the fourth generation mobile communication network technology (4G) standard; or, the radio air interface is a radio air interface based on the fifth generation mobile communication network technology (5G) standard, for example, the radio air interface is a new air interface; alternatively, the radio air interface may be a radio air interface based on the next generation mobile communication network technology standard of5G.

In some embodiments, an End to End (E2E) connection may be established between UEs 11, for example, vehicle to vehicle (V2V) communication, vehicle to Infrastructure (V2I) communication and vehicle to pedestrian (V2P) communication in vehicle to everything (V2X) and so on.

In some embodiments, the above-mentioned wireless communication system may also include a network management device 13.

Multiple access devices 12 are connected to the network management device 13 respectively. The network management device 13 may be a core network device in a wireless communication system. For example, the network management device 13 may be a Mobility Management Entity (MME) in an Evolved Packet Core (EPC). Alternatively, the network management device may be other core network devices, such as Serving GateWay (SGW), Public Data Network GateWay (PGW), Policy and Charging Rules Function (PCRF) or Home Subscriber Server (HSS), etc. The embodiments of the present disclosure do not limit the implementation form of the network management device 13.

As shown in FIG. 2A, an embodiment of the present disclosure provides a Domain Name System (DNS) configuration processing method. The method is performed by a UE. The method includes:

In S 100, a DNS configuration used by the UE is determined based on a received first DNS configuration which is selected by a network device for the UE, if the UE is not configured with a second DNS configuration that satisfies a preset condition.

The network device may be a core network device, such as SMF.

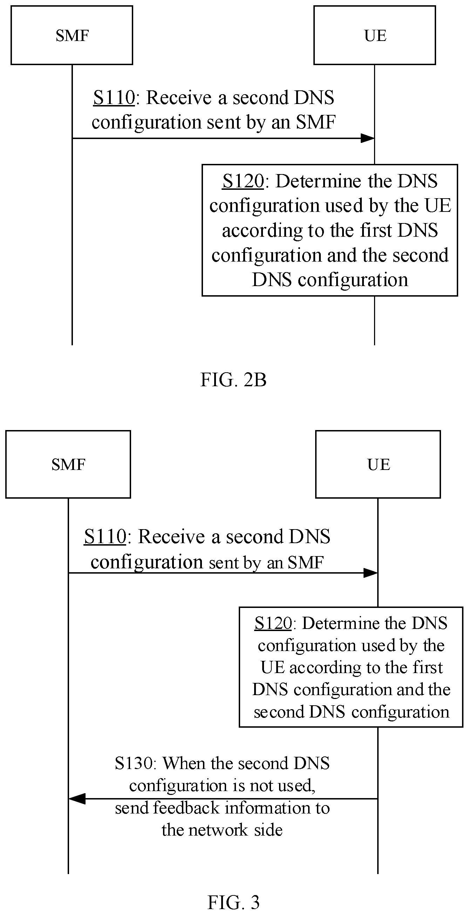

As shown in FIG. 2B, an embodiment of the present disclosure provides a Domain Name System (DNS) configuration processing method. The method is performed by a UE. The method includes:

In S 110, a second DNS configuration sent by an SMF is received.

In S 120, the DNS configuration used by the UE is determined according to the second DNS configuration and the first DNS configuration.

The UE equipment receives a second DNS configuration from a network side. The second DNS configuration may be used to determine a DNS server from which the UE requests domain name resolution. The second DNS configuration may indicate address information of an EASDF capable of discovering an EAS.

If the UE has a domain name resolution need, the UE sends a domain name query message to a corresponding EASDF based on the second DNS configuration, and receives an IP address of an EAS returned by the EASDF. In short, the EASDF can select EAS(s) for the UE.

The selection of EAS(s) may include: EAF discovery and EAS rediscovery. EAS discovery may be that an EASDF selects EAS(s) that provides(provide) an edge computing service for the UE and returns IP address(es) of the selected EAS(s) to the UE. EAS rediscovery is mainly used when the EAS(s) determined based on EAS discovery is(are) unavailable or is(are) no longer the optimal EAS, and by rediscovering and selecting of EAS(s), IP address(es) of the reselected EAS(s) is(are) sent to the UE.

After receiving the second DNS configuration sent by the network device (i.e., the network side), the UE does not directly use the second DNS configuration, but determines, according to the second DNS configuration and the first DNS configuration, a DNS configuration used when the UE obtains a DNS service.

In the embodiment of the present disclosure, after receiving the second DNS configuration, the UE does not directly use the second DNS configuration to determine a DNS server for the UE. Instead, according to its own needs and/or needs of an application program, the UE makes an appropriate DNS configuration take effect in different application scenarios, thereby optimizing the communication service quality of the UE and the user experience of the UE.

Exemplarily, S120 may include: determining to use the second DNS configuration or the first DNS configuration according to attribute information of the first DNS configuration obtained by the UE; if it is determined to use the second DNS configuration, determining the DNS server for the UE according to the second DNS configuration; and/or, if it is determined to use the first DNS configuration, determine the DNS server for the UE according to the first DNS configuration.

The second DNS configuration is a DNS configuration sent by a mobile communication network. For example, the second DNS configuration may be a DNS configuration sent by an SMF in the mobile communication network. The first DNS configuration is any configuration different from the second DNS configuration. For example, the first DNS configuration may be: a private DNS configuration of the UE, a default DNS configuration, or a DNS configuration provided by an application within the UE.

Determining to use the second DNS configuration or the first DNS configuration according to the attribute information of the second DNS obtained by the UE, includes: determining the second DNS configuration or the first DNS configuration according to source information of the first DNS configuration. That is, the attribute information includes source information.

In one embodiment, no matter the second DNS configuration or the first DNS configuration may include at least: address information of a DNS server that can a provide DNS service. This address information includes but is not limited to IP address.

Of course, the above shows just examples of the execution of S120, and the specific implementation is not limited to the above examples.

In some embodiments, the S120 may include:
when the first DNS configuration does not satisfy the preset condition, determining to use the second DNS configuration; or
when the first DNS configuration satisfies the preset condition, determining to use the first DNS configuration.

If the first DNS configuration does not satisfy the preset condition, that is, the first DNS configuration is not a special DNS configuration or a DNS configuration with a specific source, etc., the second DNS configuration is used preferentially. If the UE uses the second DNS configuration, that is, the UE does not use the second DNS configuration.

At this time, the DNS server for the UE is determined preferentially according to the second DNS configuration. If the DNS server is determined preferentially according to the second DNS configuration, an EASDF of the network may be used to select EAS(s), thereby utilizing edge deployment characteristic(s) of the EAS and/or EASDF of the mobile communication network to provide a DNS resolution service and an edge computing service with as small latency as possible.

If the first DNS configuration satisfies the preset condition, that is, the first DNS configuration may be a special DNS configuration or a DNS configuration with a specific source, etc., then the DNS server for the UE is determined according to the first DNS configuration by considering that if the special DNS configuration or the DNS configuration with a specific source is not used, it may be possible that some services cannot be provided with high quality.

In one embodiment, the first DNS configuration satisfying the preset condition includes at least one of the following:
the first DNS configuration being a private DNS configuration of the UE; and
the first DNS configuration being a DNS configuration of an application program, and the first DNS configuration being a DNS configuration that is not allowed to be overridden.

The private DNS configuration of the UE may take effect on all application programs installed in the UE. The private DNS configuration of the UE may be a system-level DNS configuration of the UE. In a case where there is no special circumstance, if the first DNS configuration is the UE's private DNS configuration, a domain name resolution request triggered by any application program or an operating system is sent according to the private DNS configuration to obtain a DNS service provided by a DNS server specified by the first DNS configuration.

In some embodiments, the first DNS configuration being a DNS configuration that is not allowed to be overridden includes:
an application program indicating that the first DNS configuration is a DNS configuration that is not allowed to be overridden; or
the application program not indicating that the first DNS configuration is a DNS configuration that is allowed to be overridden.

For example, some application programs deploy their DNS information in a dedicated DNS server. In this case, corresponding DNS information can only be obtained from a corresponding DNS server, to make the UE obtain a correct IP address and obtain an application service provided by an application server of an application program.

In this case, an application program may explicitly indicate that the first DNS configuration is a DNS configuration that is not allowed to be overridden. In another case, an application program does not explicitly indicate that the first DNS configuration is a DNS configuration that is not allowed to be overridden, but this application program also does not explicitly indicate that the configuration can be overridden. In this case, in order to reduce a problem of abnormality in providing of an application service caused by overriding the first DNS configuration by the second DNS configuration, it may be considered by default that the first DNS configuration of the application program is a DNS configuration that is not allowed to be overridden.

If the first DNS configuration is a DNS configuration of an application program, and if the application program explicitly indicates that the DNS configuration of the first DNS configuration can be used, it may be considered that the second configuration does not satisfy the preset condition at this time.

In this way, the UE can, according to different sources or different DNS configurations, select an appropriate DNS configuration for the current application scenario to make the DNS configuration take effect, determine a DNS server based on the DNS configuration that has taken effect, and request a corresponding DNS service from a corresponding DNS server.

In some embodiments, the first DNS configuration may further include:
a DNS configuration locally cached by the UE, where the cached DNS configuration may include but is not limited to a historical DNS configuration and/or a temporary DNS configuration sent by the network side before sending the second DNS configuration;
a default DNS configuration, wherein the default DNS configuration may be: a default DNS configuration of an application program or a DNS configuration of the UE. The priority of the default DNS configuration may be relatively low, that is, when the UE or the application program or network side does not provide a DNS configuration or does not provide an available DNS configuration, a DNS configuration that the UE will use can be the default DNS configuration. However, it is worth noting that this is only an example of the default DNS configuration, and the specific implementation is not limited to this.

In some embodiments, if the first DNS configuration is the locally cached historical DNS configuration and/or the temporary DNS configuration or the default DNS configuration, it may be considered that the first DNS configuration is a DNS configuration that does not satisfy the preset condition.

In short, in the embodiments of the present disclosure, if the first DNS configuration is a DNS configuration that does not satisfy the preset condition, the second DNS configuration, which is determined by the network side according to the location information of the UE and/or the deployment information of an EAS, is prioritized. In this way, the UE can obtain a DNS service with low latency and high service quality according to the second DNS configuration.

In some embodiments, the method further includes: sending a Protocol Data Unit (PDU) session request message;
the S 110 may include:
receiving a PDU session establishment accept message returned by the network device based on the PDU session request, wherein the PDU session establishment accept message carries the second DNS configuration.

The PDU session request message may be sent by the UE to request the establishment of a PDU session. One or more application programs trigger the PDU session.

After receiving the PDU session request message, the UE is provided with a second DNS configuration for the PDU session request message. The second DNS configuration is carried in the PDU session establishment accept message returned to the UE. If the network side is not prepared to respond to the PDU session request message, the network side may send a PDU session reject message. At this time, the network side does not need to determine the second DNS configuration for the UE, that is, the PDU session reject message does not need to carry the second DNS configuration.

The determination of the second DNS configuration and the sending of the second DNS configuration are triggered by the PDU session request message and the PDU session request accept message, and there is no need to introduce a new message. Thus, the embodiment has the characteristics of strong compatibility with related art and low signaling overhead.

After the UE receives the second DNS configuration, the UE may determine whether to use the second DNS configuration to obtain a DNS service according to the second DNS configuration. If the UE decides to obtain the DNS service based on the first DNS configuration that is different from the second DNS configuration, the UE informs the network side that the second DNS configuration is not currently used.

Therefore, in some embodiments, with reference to FIG. 3, the method further includes:

In S130, when the second DNS configuration is not used, feedback information is sent to the network side. The feedback information indicates that the UE does not use the second DNS configuration; or, the feedback information indicates whether the UE uses the second DNS configuration.

By sending this feedback information, the network side can know that the UE does not implement the second DNS configuration, and the network side can stop subsequent configuration operation(s) related to the second DNS configuration or maintenance of DNS handling rule(s) related to the second DNS configuration.

The feedback information may include one or more bits. Assuming that the feedback information is indicated by 1 bit, two bit values of this bit may respectively indicate that the UE employs the second DNS configuration to obtain the DNS service and that the UE does not employ the second DNS configuration to obtain the DNS service.

In some embodiments, the S130 may include:
when the DNS server for the UE is determined according to the private DNS configuration of the UE, sending he feedback information to the network side.

The UE's private DNS configuration may be a system-level DNS configuration. If the second DNS configuration is received and the private DNS configuration exists in the UE, the UE may determine within the first time whether to use the second DNS configuration to obtain the DNS service and provide timely feedback to the network side. Here, using the second DNS configuration to obtain the DNS service may at least include: determining a DNS server according to the second DNS configuration, sending a DNS resolution request to the determined DNS server to obtain an IP address returned by the DNS, and so on.

In some embodiments, if the first DNS configuration that satisfies the preset condition is not the UE's private DNS configuration, the UE may not send the feedback information to the network side, or may send feedback information.

If the first DNS configuration is a DNS configuration of an application program and the DNS configuration is not allowed to be overridden, after the UE receives the second DNS configuration, the system side of the UE needs to interact with the application program at the application side to know whether the first DNS configuration is a DNS configuration that is allowed to be overridden. It may take a relatively long time to make the determination, and it may be possible that after the UE determines not to use the second DNS configuration, the procedure of the PDU session establishment request message has ended, and the UE will at least not report the feedback information in the process triggered by the PDU session establishment request message. Of course, the UE may also report the feedback information in the process triggered by the PDU session request message.

In some embodiments, if an application program installed in the UE preferentially provides its own DNS configuration-related information to the system side of the UE, after receiving the second DNS configuration, the system side can determine whether there is a first DNS configuration that satisfies the preset condition according to the DNS configuration submitted by the application side in advance. Of course, after receiving the second DNS configuration, the system side of the UE interacts with the application program through the Application Programming Interface (API), and determines whether the DNS configuration of the application program is the first DNS configuration that satisfies the preset condition through the result of the information interaction. If the UE can determine in time whether the DNS configuration of the application program is the first DNS configuration that satisfies the preset condition, the UE may send the feedback information to the network side in the process triggered by the PDU session establishment request message.

The feedback information may be carried in an Information Element (IE) or a container.

For example, the feedback information may be carried in a response message for the PDU session establishment request accept message and sent to the network side.

In some embodiments, the second DNS configuration includes:
address information of an Edge Application Server Discovery Function (EASDF) selected by the SMF for the UE.

The EASDF may discover an EAS that can provide a service to the UE. The second DNS configuration includes the address information of the EASDF, and the UE may send a domain name resolution request to the corresponding EASDF based on the address information, thereby obtaining the address information of the EAS that can provide the corresponding application service.

In some embodiments, the method further includes:
send a Protocol Data Unit (PDU) session request message;
receiving the second DNS configuration sent by the network side includes:
receiving a PDU session establishment accept message returned by the network device based on the PDU session request, wherein the PDU session establishment accept message carries the second DNS configuration.

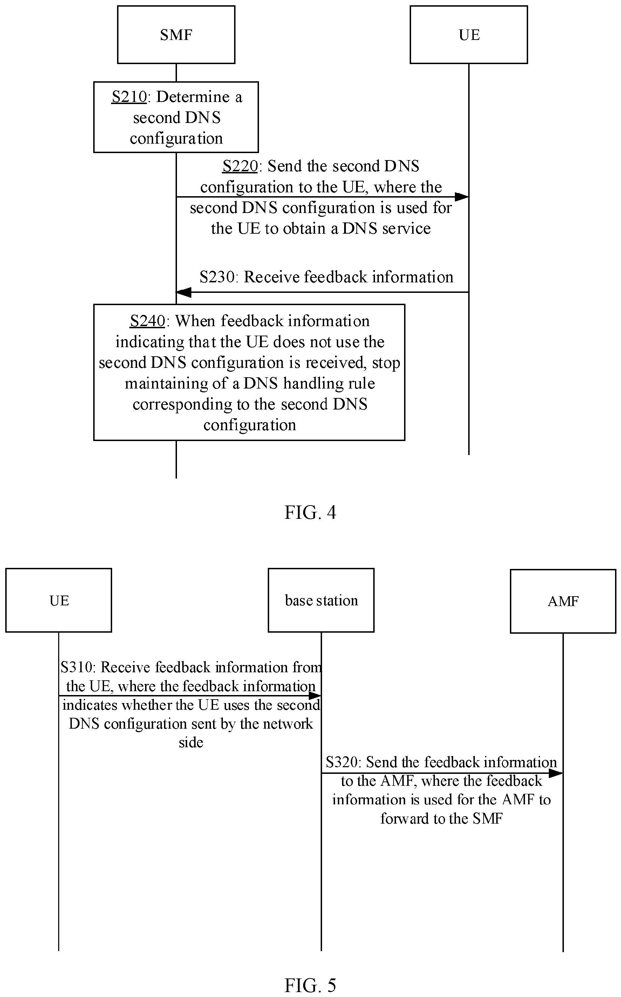

As shown in FIG. 4, an embodiment of the present disclosures a DNS configuration processing method. The method is performed by a Session Management Function (SMF). The method includes:

In S210, a second DNS configuration is determined.

In S220, the second DNS configuration is sent to the UE, where the second DNS configuration is used for the UE to obtain a DNS service.

In S230, feedback information is received.

In S240, when feedback information indicating that the UE does not use the second DNS configuration is received, maintaining of a DNS handling rule corresponding to the second DNS configuration is stopped.

The SMF determines the second DNS configuration for the UE, and then sends the determined second DNS configuration to the UE for the UE to determine a DNS server to obtain a DNS service.

After completing the second DNS configuration, the SMF also receives feedback information sent by the UE.

In one embodiment, the UE may only send the feedback information when the second DNS configuration information is not used. In this case, after receiving the feedback information, the SMF may determine that the UE does not use the second DNS configuration.

In another embodiment, the UE may send the feedback information regardless of whether the second DNS configuration is used. In this case, the information content of the feedback information indicates whether the UE uses the second DNS configuration. In this case, the SMF determines whether the UE uses the second DNS configuration based on the information content of the feedback information.

When the SMF determines that the UE does not use the second DNS configuration sent by the SMF based on the reception status of the feedback information or the information content of the feedback information, the SMF stops maintaining of a DNS handling rule corresponding to the second DNS configuration, thereby reducing the overhead incurred by maintain the DNS handling rule corresponding to the second DNS configuration.

The DNS handling rule here includes but is not limited to: a rule for responding to a DNS query message sent by the UE. For example, the DNS handling rule may at least indicate an IP address of a DNS server for responding to the DNS query message of the UE.

For example, the DNS handling rule may include a corresponding IP address for constructing an extended Domain Name System (EDNS) client subnet option. The IP address may indicate a server or a resolver for responding to the UE's DNS query message.

As another example, the DNS handling rule may include an IP address of a corresponding local DNS server. In this case, DNS handling rule may also indicate the EASDF to simply forward the DNS query to a pre-configured DNS server or resolver.

The stopping maintaining of the DNS handling rule corresponding to the second DNS configuration here includes but is not limited to at least one of the following:

The SMF does not send and invoke a DNS context update request (Neasdf_DNSContext_Update Request) message to the EASDF indicated by the second DNS configuration. The invoked DNS context update request message may carry EASDF context identification (ID) and a DNS handling rule, and may be used for updating or deleting a DNS handling rule of the UE stored by the EASDF.

A context update response (Neasdf_DNSContext_Update Response) message returned by a DNS server such as EASDF is received.

If the UE uses the second DNS configuration to obtain a DNS service, when the UE needs to obtain the DNS service, the EASDF receives a DNS query message sent by the UE to the DNS server such as the EASDF corresponding to the second DNS configuration.

If it is determined that a DNS message generated by the DNS query message complies with the DNS handling rule, the EASDF indicated by the second DNS configuration invokes a DNS context notify request (Neasdf_DNSContext_Notify Request) message to report the DNS message to the SMF. Here, the DNS handling rule may include: a DNS message reporting rule.

After receiving the DNS context notify request message, the SMF sends a DNS context notify request response (Neasdf_DNSContext_Notify Response) message to the EASDF.

The EASDF receives a DNS query message of the UE.

The DNS query message is processed according to the DNS handling rule. For example, an EDNS client subnet option is added to the DNS query message according to the DNS handling rule, and the DNS query message with the EDNS client subnet option added is sent to a C-DES server. As another example, the EASDF sends DNS to a local DNS server.

The EASDF receives a DNS response message from the DNS system and determines whether it can be sent to the UE according to the DNS handling rule.

If the IP address or Fully Qualified Domain Name (FQDN) of EAS in the DNS response message matches the DNS rule provided by SMF, the EASDF may send DNS message reporting to the SMF by invoking the DNS context notify request. The DNS message reporting includes EAS information. The EAS information at least includes the IP address of the EAS. If the EASDF receives IP addresses of multiple EASs from the DNS server it has contacted, the DNS message reporting includes the IP addresses of the multiple EASs in the DNS response message. Additionally, DNS message reporting may further include received FQDN and an EDNS client subnet option.

In one embodiment, according to the DNS handling rule, after receiving the DNS response message, the EASDF first buffers the DNS response message until receiving SMF notification regarding the DNS message reporting,, and then the DNS response message is sent to the UE. According to the DNS handling rule, if the DNS response message is configured to be buffered and reported, a reporting control rule may also be set. For example, assuming that the DNS handling rule defines reporting-once, every time the EASDF obtains a DNS response message, it needs to send DNS message reporting once to the SMF according to a detection template defined by the DNS handling rule, and then after receiving a notification of the SMF which is based on the DNS message reporting, the DNS response message is sent to the UE.

The EASDF may respond with a service operation through a DNS context notify request (Neasdf_DNSContext_Notify Request) message.

The EASDF receives a DNS context notify response (Neasdf_DNSContext_Notify Response) message of the SMF.

The SMF optionally performs selection and insertion of an uplink classifier or a local session anchor UPF, and selects and inserts UL CL/BP and Local PSA.

Based on the EAS information received from the EASDF, other UPF selection criteria, and the service experience or performance analysis of an edge application, the SMF may determine DNAI and determine associated N6 data routing information for the DNAS. The SMF optionally performs Uplink Classifier (UL CL)/Branching Point (BP) and local PDU session anchor (PSA) selection and insertion. In the case of UL CL, the SMF determines a traffic detection rule and a data routing rule based on the IP address range(s) per Data Network Access Identifier (DNAI).

The SMF invokes a DNS context update request (Neasdf_DNSContext_Update Request) (carrying a DNS handling rule) to send a request message to the EASDF. The DNS handling rule indicates the EASDF to send the buffered DNS response message to the terminal UE.

The EASDF sends a response message (Neasdf_DNSContext_Update Response) to the DNS context update request to the SMF.

The EASDF sends the DNS response message to the terminal UE.

In some embodiments, S210 may include:
determining the second DNS configuration according to deployment information of an edge server EAS and/or a location of the UE.

A nearby EASDF may be selected according to the location information of the UE, and then the second DNS configuration may be determined, and so on.

According to the location information of the UE and the deployment information of the EAS, an EASDF that is close to both the UE and the EAS may be selected.

Determining the second DNS configuration according to the deployment information of the EAS and/or the location of the UE can enable the UE to obtain a DNS service from a DNS server relatively close to the UE, thereby ensuring response latency of the DNS service.

The deployment information of the EAS indicates information such as an EAS deployment location.

In some embodiments, determining the second DNS configuration according to the deployment information of the edge server EAS and the location of the UE includes:
determining the second DNS configuration according to the deployment information of the EAS and the location information of the UE, and according to at least one of: subscription information of the UE, a local configuration of the SMF, and policy information associated with the PDU session.

For example, the subscription information of the UE indicates whether the UE can use an EASDF to participate in provisioning of a DNS service. The local policy of the SMF and/or the policy information associated with the PDU session may be used to select an appropriate EASDF for the UE.

Different PDU sessions may involve different services, and different services may use different policies. Therefore, the SMF may generate the second DNS according to a local policy and/or a policy requested from the Policy Control Function (PCF). The policy information associated with the PDU session may be policy information from the PCF. Of course, the above are just examples, and the specific implementation is not limited to the above examples.

In some embodiments, S210 may include: determining the second DNS configuration when receiving a PDU session establishment request message of the UE;

S220 may include: sending to the UE a PDU session establishment accept message in response to the PDU session establishment request message, where the PDU session establishment accept message carries the second DNS configuration.

The feedback information may be carried in a response message to the PDU session establishment accept message and returned to the network.

In some embodiments, S230 may include: receiving a PDU session context update request message carrying the feedback information.

In some embodiments, S210 may include: selecting an EASDF, wherein the first DSN configuration includes address information of the selected EASDF.

Furthermore, the method further includes:
sending to the selected the EASDF an Internet Protocol (IP) address of the UE, an Subscriber Permanent Identifier (SUPI) of the UE, identification information of a notification endpoint and a DNS handling rule. The notification endpoint may be that: when the EASDF obtains the DNS response message, it needs to send a DNS message report to the notification endpoint to ensure the security provided by the DNS service.

As shown in FIG. 5, an embodiment of the present disclosure provides a DNS configuration processing method. The method is performed by a base station. The method includes:

In S310, feedback information from a UE is received. The feedback information indicates whether the UE uses a second DNS configuration sent by a network side.

In S320, the feedback information is sent to an AMF. The feedback information is used for the AMF to forward to the SMF, and when the feedback information indicates that the UE does not use the second DNS configuration, the feedback information is used for the SF to determine to stop maintaining a DNS handling rule corresponding to the second DNS configuration.

The DNS configuration processing method is performed by a base station, which may be an eNB or a gNB. In short, the base station here generally refers to a network element of an access network.

The base station receives the feedback information from the UE, and the feedback information indicates whether the UE uses the second DNS configuration sent by the network side. For example, in one embodiment, the feedback information only indicates that the UE does not use the second DNS configuration sent by the network side.

The feedback information may be carried in a Non-Access Stratum (NAS) message. In this case, the base station may directly send the NAS message to the SMF through the AMF.

Of course, the feedback information may alternatively be carried in a Radio Resource Control (RRC) message. By parsing the RRC message, the base station finds that the RRC message carries the feedback information, and sends the feedback information to the AMF. AMF further forwards the feedback information to the SMF. If the UE does not use the second DNS configuration, after receiving the feedback information, the SMF stop maintaining the DNS handling rules corresponding to the second DNS configuration.

In an embodiment of the present disclosure, the feedback information may be carried in an IE or a container in a message sent by the UE to the base station.

In some embodiments, receiving feedback information from the UE includes:
receiving a response message to a PDU session establishment accept message, the response message carrying the feedback information.

Using the response message to the PDU session establishment accept message to carry the feedback information, it is not needed to introduce a special message. This embodiment has the characteristics of strong compatibility with related art, that is, the transmission of feedback information is simple.

In one embodiment, S320 may include:
sending an N2 PDU session response message carrying the feedback information to the AMF.

In the embodiment of the present disclosure, the feedback information is carried in the N2 PDU session response message sent by the base station to the AMF, so that the AMF receives the feedback information when receiving the N2 PDU session response message.

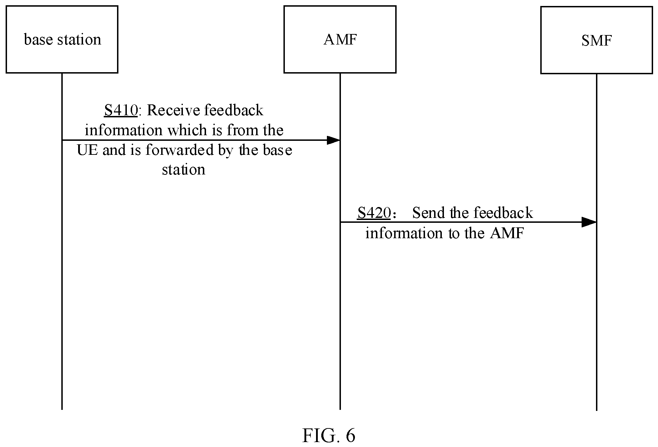

As shown in FIG. 6, an embodiment of the present disclosure provides a DNS configuration processing method. The method is performed by an AMF. The method includes:

In S410, feedback information, which is from a UE and is forwarded by a base station, is received.

In S420, the feedback information is sent to the AMF. When the feedback information indicates that the UE does not use a second DNS configuration, the feedback information is used for the SMF to determine to stop maintaining a DNS handling rule corresponding to the second DNS configuration.

After receiving the feedback information of the UE which is forwarded by the base station, the AMF sends the feedback information to the SMF. If the feedback information indicates that the UE does not use the second DNS configuration, the SMF stops maintaining the DNS handling rule corresponding to the second DNS configuration, thereby reducing cost incurred by maintaining the second DNS configuration at the network side.

In some embodiments, S420 may include: receiving an N2 PDU session response message carrying the feedback information.

The feedback information is carried in the N2 PDU session response message, which makes it easy to receive the feedback information.

In addition to meeting the connection needs between people, 5G networks also need to address the communication needs between people and things, and between things and things. The network latency of nearly 100 ms in 4G networks cannot meet the needs of service scenarios such as Internet of Vehicles, industrial control, or AR/VR, etc. The network requires lower processing latency and higher processing capabilities, and needs to provide data processing capabilities and services at the edge of the network close to where data is generated.

Edge computing supports operator(s) and third-party application service(s) to be deployed near an access point of a network where a UE resides in, thereby achieving efficient service delivery through reduced end-to-end latency and load on the transport network.

5G edge computing is a combination of edge infrastructure(s), edge network(s), edge computing platform (s) and edge application(s). As a connection anchor point, UPF collaborates with the 5G core network, edge computing platform(s) and terminals to meet various functions in the 5G edge computing scenario. The interactions among SMF, UPF and PCF realize the offloading and policy functions of 5G edge computing. The unified capability exposure node NEF is responsible for the interaction between an external edge application and the 5G network. As an AF in the 5G network, an edge computing platform manages sessions and policies through NEF/PCF-SMF-UPF. Edge applications deployed on an edge computing platform may belong to one or more network slices.

3GPP 5G network supports deployment of Edge Hosting Environment (EHE) in a data network (DN) outside the anchor UPF of a session. An EHE may be under the control of an operator or a third party. The local deployment in which the EHE network is deployed may have user plane connectivity with a centrally deployed PSA UPF and locally deployed PSA UPF in the same data network.

3GPP 5G network supports Edge Application Server EAS Discovery Function (EASDF). The EASDF has user plane connectivity with PSA UPF, processes DNS messages according to SMF instructions, and is used to transmit DNS signaling with the UE.

An edge application service may be provided by multiple edge application servers EASs. When starting an edge application service, a terminal UE needs to know the IP address of the application server. The terminal UE may select an appropriate EAS (such as an EAS closest to the UE) through the EASDF function, so that the data flow may be routed from the local to the EAS, thereby optimizing the service latency, reducing data routing path and improving user service experience.

At the UE side, various factors may affect the DNS query performed by the terminal using the EASDF DNS information sent by the network side:
a private DNS configuration of a UE;
a locally cached DNS configuration of a UE;
a DNS configuration provided by an application program;
a default DNS configuration.

In related art, the network side sends EASDF DNS information (that is, one of the aforementioned second DNS configurations) to a UE, but the UE may employ other DNS configuration based on other factor(s). For edge computing services deployed by communication operators or services with high latency requirements, the communication operator's DNS configuration needs to be used to ensure that latency and routing are optimized to improve user experience.

However, if the UE employs a local DNS configuration, the operator's DNS configuration cannot be implemented, making it impossible to optimize latency and routing and improve user experience.

However, the UE itself has deployed CDN application(s), or services that need to be accessed through user private configuration, and does not want its own DNS configuration to be overridden by the EASDF DNS information sent by the communication operator.

If the UE does not use the EASDF DNS information, the network side does not know this and will continue to maintain DNS handling rule(s) of the EASDF based on UE status, such as location information, etc.

The UE should use the EASDF DNS information sent to the UE by the network side to perform DNS configuration as much as possible, unless the UE or application(s) must use its own DNS configuration:
for edge computing services deployed by communication operator(s) or services with high latency requirements, the EASDF DNS information sent by the operator(s) should be applied;
for other services, for example, an application itself deploys CDN application(s), or service(s) that needs(need) to be accessed through user private configuration, the application program's own DNS configuration should be applied.

The UE may select a DNS configuration based on the following information:
a private DNS configuration of the UE;
a locally cached DNS configuration of the UE;
a DNS configuration provided by an application program;
a default DNS configuration;
EASDF DNS information received from the network side. The EASDF DNS information here is one of the aforementioned second DNS configurations.

If the EASDF DNS information is received from the network side, the UE uses this information to perform DNS configuration as much as possible, unless:
an application indicates that its DNS configuration cannot be overridden; or
an application does not explicitly indicate that its DNS configuration can be overridden;
the UE is configured with a private DNS configuration.

If the UE is configured with a private DNS configuration that can be applied to all PDU sessions, after receiving the EASDF DNS information from the network side, the UE returns feedback information to the network side to indicate that the UE uses the private DNS information and does not use the EASDF DNS information.

The network side will not maintain the DNS handling rule(s) corresponding to the EASDF for the current PDU session any more.

If the FQDN in a DNS query matches the FQDN(s) provided by the SMF, based on instructions by SMF, one of the following options is executed by the EASDF:
1) Option A: The EASDF includes an EDNS Client Subnet option into the DNS Query message, and sends the DNS Query message to the DNS server for resolving the FQDN. The DNS server may resolve the EAS IP address considering the EDNS Client Subnet option and sends the DNS Response to the EASDF;
2) Option B: The EASDF sends the DNS Query message to a local DNS server which is responsible for resolving the FQDN within the corresponding L-DN. The EASDF receives the DNS Response message from the local DNS server.

The EAS discovery procedure using the EASDF is as follows. The SMF sends the EASDF address and corresponding priority information to the UE for the UE to make a DNS policy decision. Optionally, after SMF learns the UE DNS policy, it reports or redirects DNS information according to an operator policy. This ensures the optimization of EAS in the edge computing application scenario, guarantees latency and routing optimization, and ensures user experience.

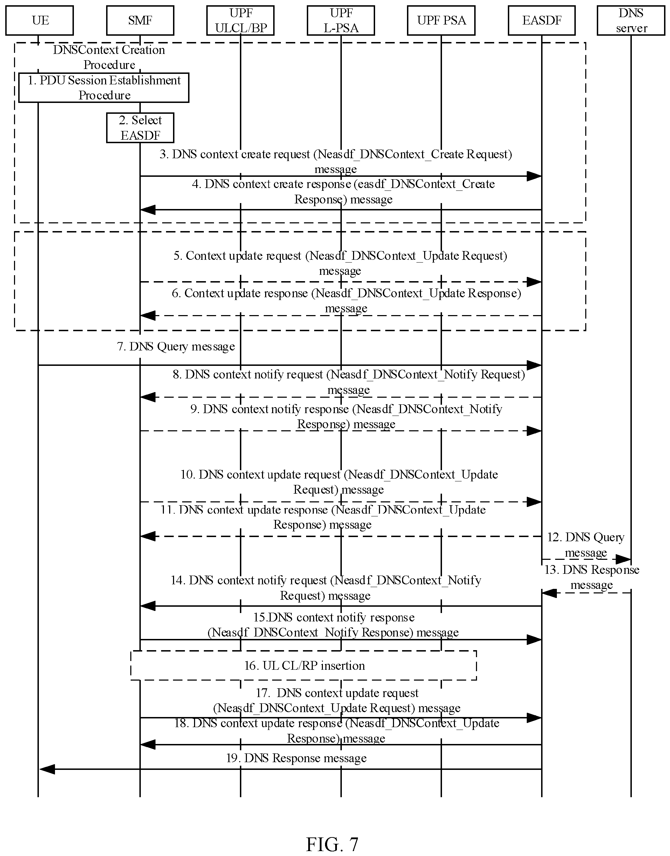

Referring to FIG. 7, the method provided by an embodiment of the present disclosure may include the following steps:
1. PDU session establishment procedure: in this PDU session establishment procedure, the UE sends a PDU session establishment request to the SMF.
2. During the PDU session establishment procedure, the SMF performs EASDF selection. The SMF considers the UE subscription information to select an EASDF as the DNS server of the PDU session. The SMF obtains the EAS deployment information via PCF PDU session related policy, or the SMF pre-configures the EAS deployment information based on the UE subscription, and the SMF selects an EASDF based on the EAS deployment information.
   If SMF determines based on local configuration that the interaction between the EASDF and the DNS Server in the DN needs to be carried out through PSA UPF, then the SMF configures PSA UPF in the N4 rule to forward DNS message(s) between the EASDF and the DN.
3. The SMF sends Neasdf_DNSContext_Create Request to the selected EASDF. The message carries information such as UE IP address, SUPI, DNN, notification endpoint, DNS handling rule(s), etc.

After completing this processing, the SMF carries the IP address of the EASDF as DNS server for the UE in the PDU Session Establishment Accept message. The terminal UE configures the EASDF as the DNS server for the PDU session unless:
an application indicates that its DNS configuration cannot be overridden;
an application does not explicitly indicate that its DNS configuration can be overridden;
the UE has a private DNS configuration.

If a user configures in the UE private DNS information that can be applied to all PDU sessions, after receiving the EASDF DNS information from the network side, the UE may return feedback to the network side to indicate that the UE has been configured with private DNS information in the following ways:

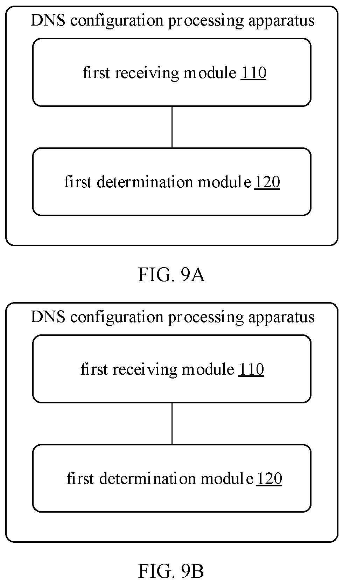

RRC, N2 and Nsmf_PDUSession_UpdateSMContext Request, as shown in FIG. 9.

If the SMF receives the notification that the UE has the private DNS configuration, the following steps 5 to 19 are no longer performed.

4. The EASDF creates a DNS context for the PDU session and stores the UE IP address, SUPI, notification endpoint and possibly provided DNS handling rule(s) into the DNS context. The EASDF invokes service operation Neasdf_DNSContext_Create Response and sends the response message to the SMF.

5. The SMF may invoke Neasdf DNSContext Update Request (EASDF context ID, DNS handling rule) to the EASDF. The trigger condition for the update procedure includes but is not limited to: when the UE moves to a new location, or reporting by the EASDF of a DNS Query with certain FQDN, or insertion/removal of local PSA to update rules to handle DNS messages.

6. The EASDF responds with Neasdf DNSContext Update Response and sends an update response message to the SMF.

7. The terminal UE sends a DNS Query message to the EASDF.

The terminal UE has previously received the priority indication of the EASDF address and the DNS information provided by the SMF, makes a DNS policy decision based on the priority indication, and sends a DNS Query to the edge application server discovery function (EASDF), which performs the discovery or selection of an edge application server.

8. If the Query message satisfies a DNS message handling rule for reporting, the EASDF reports the DNS message to the SMF by invoking Neasdf_DNSContext_Notify Request.

9. The SMF responds with Neasdf_DNSContext_Notify Response and sends the response message to the EASDF.

10. If the DNS handling rule for the FQDN received in the report needs to be updated, such as providing update information to build EDNS Client Subnet option information, the SMF invokes Neasdf_DNSContext_Update Request (DNS handling rule) to the EASDF.

For Option A, the DNS handling rule includes corresponding IP address to be used to build the EDNS Client Subnet option. For Option B, the DNS handling rule includes corresponding "Local DNS Server IP Address". The EASDF may as well be instructed by the DNS handling rule to simply forward the DNS Query to a pre-configured DNS server/resolver.

11. The EASDF responds with Neasdf DNSContext Update Response and sends the response message to the SMF.

12. The EASDF handles the DNS Query message received from the terminal UE. The details may be as follows:
- For the aforementioned Option A, the EASDF adds the EDNS Client Subnet option into the DNS Query message and sends it to the C-DNS server;
- For the aforementioned Option B, the EASDF sends the DNS Query message to the local DNS server.

If no DNS message detection template within the DNS message handling rule provided by the SMF matches the requested FQDN in the DNS Query, the EASDF may directly send a DNS Query to a pre-configured DNS server/resolver.

13. The EASDF receives the DNS Response from the DNS system and determines whether the DNS Response can be sent to the UE.

14. If the EAS IP address or the FQDN in the DNS Response message matches the reporting condition provided by the SMF, the EASDF may send a DNS message to the SMF by invoking Neasdf_DNSContext_Notify request including EAS information. If the EASDF has received multiple EAS IP addresses from the DNS server it has contacted, the DNS message reporting may contain multiple EAS IP addresses. The DNS message reporting may contain the FQDN and the EDNS Client Subnet option received in the DNS Response message.

After receiving the DNS handling rule, the EASDF first buffers the DNS Response message until it receives the SMF notification and then sends it to the UE. If the DNS Response(s) is required to be buffered and reported to the SMF, when the reporting-once control information is set, the EASDF only reports to the SMF once when DNS message matching with the DNS message detection template is detected.

15. The SMF invokes Neasdf_DNSContext_Notify Response service operation.

16. The SMF optionally performs the selection and insertion of the uplink classifier or local session anchor UPF, and selects and inserts the UL CL/BP and Local PSA.

Based on the EAS information received from the EASDF, other UPF selection criteria, and the service experience or performance analysis for an edge application, the SMF may determine the DNAI and determine the associated N6 traffic routing information for the DNAS. The SMF optionally performs UL CL/BP and Local PSA selection and insertion. In the case of UL CL, the traffic detection rules and data routing rules are determined by the SMF based on IP address range(s) per DNAI.

17. The SMF invokes Neasdf_DNSContext_Update Request (carrying DNS handling rule) to send a request message to the EASDF. The DNS handling rule indicates the EASDF to send the buffered DNS Response message to the terminal UE.

18. The EASDF responds with Neasdf DNSContext Update Response and sends the response message to the SMF.

19. The EASDF sends the DNS Response to the terminal UE.

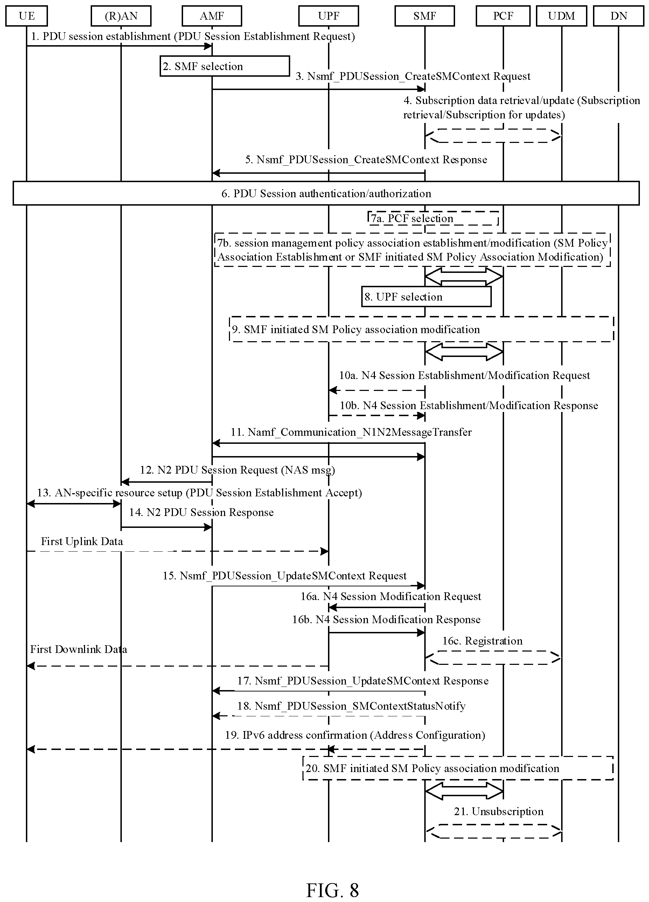

Referring to FIG. 8, the PDU session establishment and context update may include the following:
1. The UE sends a PDU Session Establishment Request to the Access Network (AN). RAN is Radio Access Network (AN).
2. The AMF selects an SMF;
3. The AMF sends Nsmf PDUSession_CreateSMContext Request to the selected SMF;
4. The SMF obtains subscription data from User Data Management (UDM) or updates subscription data;
5. The SMF sends Nsmf_PDUSession_CreateSMContext Response to the AMF;
6. PDU session authentication/authorization;
7a. PCF selection;
7b. Session management policy association establishment/modification;
8. UPF selection;
9. SMF initiated SM policy association modification;
10a. The SMF sends an N4 Session Establishment/Modification Request to the UPF;
10b. The UPF sends an N4 Session Establishment/Modification Response to the SMF;
11. The SMF sends a N1N2 message transfer (Namf_Communication_N1N2MessageTransfer) to the AMF;
12. The AMF sends an N2 PDU session request (N2 PDU Session Request) to the (R)AN. This message is a NAS message (NAS msg);
13. The (R)AN sends access network resource setup (AN-specific resource setup (PDU session establishment accept)) to the UE;
14. N2 PDU session response (N2 PDU Session Response);

First Uplink Data is transmitted;
15. The AMF sends a PDU session context update request (Nsmf_PDUSession_UpdateSMContext Request) to the SMF;
16. The SMF registers with the UDM;
17. The SMF returns a PDU session context update response (Nsmf_ PDUSession_UpdateSMContext Response) to the AMF;
18. PDU session context status notification (Nsmf_PDUSession_SMContextStatusNotify);
19. IPv6 address determination;
20. SMF initiated SM policy association modification.
21. SMF unsubscribes to UDM subscription data.

As shown in FIG. 9A, an embodiment of the present disclosure provides a DNS configuration processing apparatus. The apparatus includes a first determination module 120.

The first determination module 120 is configured to determine a DNS configuration used by a UE based on a received first DNS configuration which is selected by a network device for the UE, if the UE is not configured with a second DNS configuration which satisfies a preset condition.

In some embodiments, as shown in FIG. 9B, the DNS configuration processing apparatus may further includes a first receiving module 110.

The first receiving module 110 is configured to receive the second DNS configuration sent by a network device such as an SMF.

The DNS configuration processing apparatus may be included in the UE.

In one embodiment, the first receiving module 110 and/or the first determination module 120 may be program module(s). After the program module(s) is(are) executed by a processor, the second DNS configuration sent by the SMF can be received, and the DNS configuration (that is, the DNS configuration that takes effect in the UE) ultimately used by the UE can be determined according to the second DNS configuration and the first DNS configuration.

In another embodiment, the first receiving module 110 and/or the first determination module 120 may be a combination of software and hardware modules, which includes but is not limited to: various programmable arrays; the programmable arrays include, but are not limited to: field programmable arrays and/or complex programmable arrays.

In yet another embodiment, the first receiving module 110 and/or the first determination module 120 may be a pure hardware module; the pure hardware module includes but is not limited to: an application specific integrated circuit.

In one embodiment, the first determination module 120 is configured to: determine to use the second DNS configuration when the first DNS configuration does not satisfy a preset condition; or; determine to use the first DNS configuration when the first DNS configuration satisfies the preset condition.

In one embodiment, the first DNS configuration satisfying the preset condition includes at least one of the following:
the first DNS configuration being a private DNS configuration of the UE;
the first DNS configuration being a DNS configuration of an application program, and the first DNS configuration being a DNS configuration that is not allowed to be overridden.

In one embodiment, the first DNS configuration being a DNS configuration that is not allowed to be overridden includes:
the application program indicating that the first DNS configuration is a DNS configuration that is not allowed to be overridden; or
the application program not indicating that the first DNS configuration is a DNS configuration that is allowed to be overridden.

In one embodiment, the apparatus further includes:
a first sending module configured to send feedback information to the network side when determining a DNS server for the UE according to the first DNS configuration, wherein the feedback information indicates that the UE does not use the second DNS configuration, or the feedback information indicates whether the UE uses the second DNS configuration.

In one embodiment, the first sending module is configured to send the feedback information to the network side when determining the DNS server for the UE according to the private DNS configuration of the UE.

In one embodiment, the second DNS configuration includes:
address information of an Edge Application Server Discovery Function (EASDF) selected by the SMF for the UE.

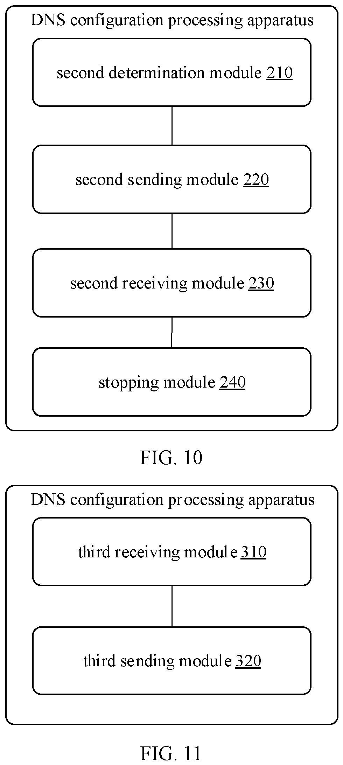

As shown in FIG. 10, an embodiment of the present disclosure provides a DNS configuration processing apparatus. The apparatus includes a second determination module 210, a second sending module 220, a second receiving module 230 and a stopping module 240.

The second determination module 210 is configured to determine a second DNS configuration.

The second sending module 220 is configured to send the second DNS configuration to the UE, wherein the second DNS configuration is used for the UE to obtain a DNS service.

The second receiving module 230 is configured to receive feedback information.

The stopping module 240 is configured to, when the feedback information indicates that the UE does not use the second DNS configuration, stop maintain a DNS handling rule corresponding to the second DNS configuration.

The DNS configuration processing apparatus may be included in the SMF.

In one embodiment, the second determination module 210, the second sending module 220, the second receiving module 230 and the stopping module 240 may all be program modules. After the program modules are executed by a processor, the above-mentioned functions of each module can be implemented.

In another embodiment, the second determination module 210, the second sending module 220, the second receiving module 230 and the stopping module 240 may all be combinations of software and hardware modules; the combinations of software and hardware modules include but are not limited to: various programmable arrays; the programmable arrays include, but are not limited to: field programmable arrays and/or complex programmable arrays..

In some embodiments, the second determination module 210, the second sending module 220, the second receiving module 230 and the stopping module 240 may all be pure hardware modules, and the pure hardware modules include but are not limited to application specific integrated circuits.

In one embodiment, the second receiving module 230 is configured to receive a PDU session context update request message carrying the feedback information.

As shown in FIG. 11, an embodiment of the present disclosure provides a DNS configuration processing apparatus. The apparatus includes: a third receiving module 310 and a third sending module 320.

The third receiving module 310 is configured to receive feedback information from a UE, wherein the feedback information indicates that the UE does not use a second DNS configuration, or the feedback information indicates whether the UE uses the second DNS configuration.

The third sending module 320 is configured to send the feedback information to an AMF, where the feedback information is used for the AMF to forward to the SMF, and is used for the SMF to determine to stop maintaining a DNS handling rule corresponding to the second DNS configuration.

In one embodiment, the third receiving module 310 and the third sending module 320 may both be program modules. After the program modules are executed by a processor, the operations of the above-mentioned modules can be implemented.

In another embodiment, the third receiving module 310 and the third sending module 320 may both be combinations of software and hardware modules; the combinations of software and hardware modules include but are not limited to: various programmable arrays; the programmable array include but are not limited to: field programmable arrays and/or complex programmable arrays.

In some embodiments, the third receiving module 310 and the third sending module 320 may both be pure hardware modules, and the pure hardware modules include but are not limited to application specific integrated circuits.

In one embodiment, the third receiving module 310 is configured to receive a response message to a PDU session establishment accept message, the response message carrying the feedback information.

In one embodiment, the third sending module 320 is configured to send an N2 PDU session response message carrying the feedback information to the AMF.

In one embodiment, the third receiving module 310 is configured to receive a response message of the PDU session establishment accept message, the response message carrying the feedback information.

In one embodiment, the third sending module 320 is configured to send an N2 PDU session response message carrying the feedback information to the AMF.

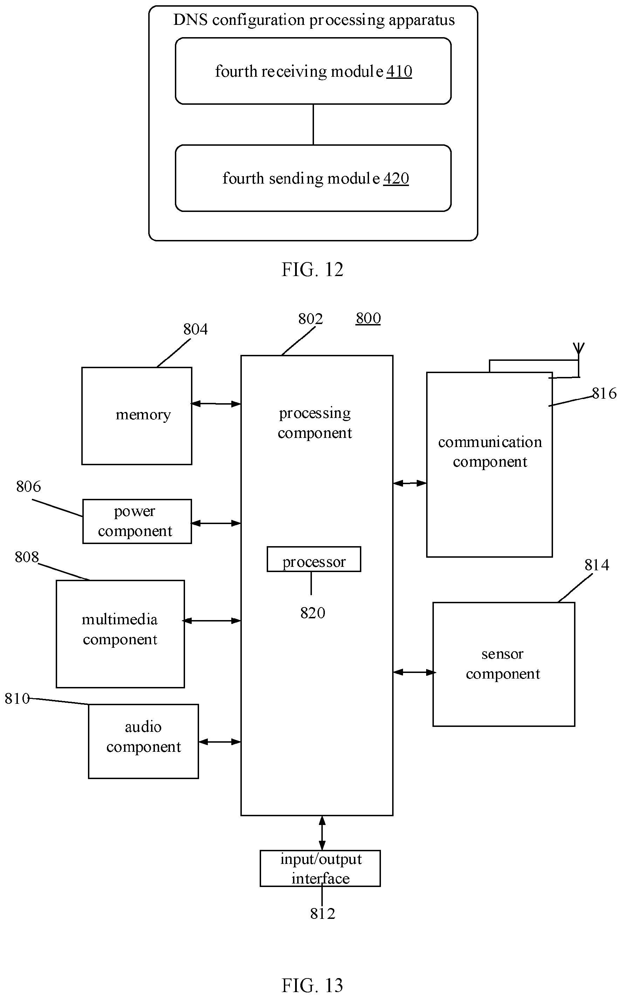

As shown in FIG. 12, an embodiment of the present disclosure provides a DNS configuration processing apparatus. The apparatus includes: a fourth receiving module 410 and a fourth sending module 420.

The fourth receiving module 410 is configured to receive feedback information which is from a UE and is forwarded by a base station.

The fourth sending module 420 is configured to send the feedback information to an AMF. When the feedback information indicates that the UE does not use a second DNS configuration, the feedback information is used for the SMF to determine to stop maintaining a DNS handling rule corresponding to the second DNS configuration.

In one embodiment, the fourth receiving module 410 and the fourth sending module 420 may both be program modules. After the program modules are executed by a processor, the operations of the above-mentioned modules can be implemented.

In another embodiment, the fourth receiving module 410 and the fourth sending module 420 may both be combinations of software and hardware modules; the combinations of software and hardware modules include but are not limited to: various programmable arrays; the programmable array include but are not limited to: field programmable arrays and/or complex programmable arrays.

In some embodiments, the fourth receiving module 410 and the fourth sending module 420 may both be pure hardware modules, and the pure hardware modules include but are not limited to application specific integrated circuits.

In one embodiment, the fourth receiving module 410 is configured to receive an N2 PDU session response message carrying the feedback information.

An embodiment of the present disclosure provides a communication device, including:
a memory configured to store instructions executable by a processor; and
the processor connected with the memory;
the processor is configured to perform a control method and/or an information method of a terminal provided by any of the foregoing technical solutions.

The processor may include various types of storage medium, which may be non-transitory computer storage medium that can continue to memorize information stored thereon after the communication device is powered off.

Here, the communication device includes: an access device or a UE or a core network device. The access network device may include at least the base station described previously. The core network device may include at least the SMF and/or AMF described previously.

The processor may be connected to the memory through a bus or the like, and may be configured to read the executable program stored in the memory, for example, at least one of the methods shown in FIG. 2 to FIG. 8.

FIG. 13 is a block diagram of a UE 800 according to an example embodiment. For example, the UE 800 may be a mobile phone, a computer, digital broadcast user equipment, a messaging device, a gaming console, a tablet, a medical device, exercise equipment, a personal digital assistant, and the like.

Referring to FIG. 13, the UE 800 may include one or more of the following components: a processing component 801, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 800 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G, or 3G, or a combination thereof. In one example embodiment, the communication component 816 receives a broadcast signal or broadcast associated information from an external broadcast management system via a broadcast channel. In one example embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 804 including instructions executable by the processor 820 in the UE 800, for performing the above-described methods. For example, the non-transitory computer-readable storage medium may be a ROM, a Random Access Memory (RAM), a CD-ROM, a magnetic tape, a floppy disc, an optical data storage device, and the like.

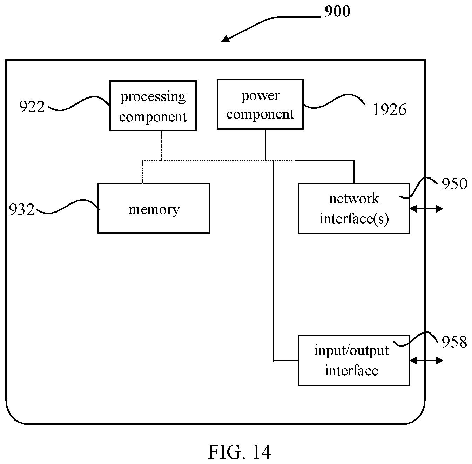

As shown in FIG. 14, an embodiment of the present disclosure shows a structure of an access device. For example, a communication device 900 may be provided as a network side device. The communication device may be the above described access device and/or core network device.

Referring to FIG. 14, the communication device 900 includes a processing component 922 that further includes one or more processors, and memory resources represented by a memory 932 for storing instructions executable by the processing component 922, such as application programs. The application programs stored in the memory 932 may include one or more modules each corresponding to a set of instructions. Further, the processing component 922 is configured to execute the instructions to perform any of the above described methods which are applied at the access device, , for example, the methods shown in FIG. 2 to FIG. 8.

The communication device 900 may also include a power component 926 configured to perform power management of the communication device 900, wired or wireless network interface(s) 950 configured to connect the communication device 900 to a network, and an input/output (I/O) interface 958. The communication device 900 may operate based on an operating system stored in the memory 932, such as Windows Server^{™}, Mac OS X^{™}, Unix^{™}, Linux^{™}, FreeBSD^{™}, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A Domain Name System (DNS) configuration processing method, performed by User Equipment (UE), the method comprising:
determining a DNS configuration used by the UE based on a received first DNS configuration which is selected by a network device for the UE, if the UE is not configured with a second DNS configuration which satisfies a preset condition.

2. The method according to claim 1, wherein determining the DNS configuration used by the UE based on the received first DNS configuration which is selected by the network device for the UE if the UE is not configured with the second DNS configuration which satisfies a preset condition comprises:
when the first DNS configuration does not satisfy the preset condition, determining to use the second DNS configuration; or
when the first DNS configuration satisfies the preset condition, determining to use the first DNS configuration.

3. The method according to claim 2, wherein the first DNS configuration satisfying the preset condition comprises at least one of the following:
the first DNS configuration being a private DNS configuration of the UE; or
the first DNS configuration being a DNS configuration of an application program, and the first DNS configuration being a DNS configuration which is not allowed to be overridden.

4. The method according to claim 3, wherein the first DNS configuration being the DNS configuration which is not allowed to be overridden comprises:
the application program indicating that the first DNS configuration is the DNS configuration which is not allowed to be overridden; or
the application not indicating that the first DNS configuration is a DNS configuration which is allowed to be overridden.

5. The method according to any one of claims 2 to 4, further comprising:
when determining a DNS server for the UE according to the first DNS configuration, sending feedback information to a network side, wherein the feedback information indicates that the UE does not use the second DNS configuration, or the feedback information indicates whether the UE uses the second DNS configuration.

6. The method according to claim 5, wherein sending the feedback information to the network side when determining the DNS server for the UE according to the first DNS configuration comprises:
when determining the DNS server for the UE according to a private DNS configuration of the UE, sending the feedback information to the network side.

7. The method according to any one of claim 1, wherein the second DNS configuration comprises:
address information of an Edge Application Server Discovery Function (EASDF) selected by an SMF for the UE.

8. A DNS configuration processing method, performed by an SMF, the method comprising:
determining a second DNS configuration;
sending the second DNS configuration to UE, wherein the second DNS configuration is used for the UE to obtain a DNS service;
receiving feedback information; and
when the feedback information indicates that the UE does not use the second DNS configuration, stopping maintaining of a DNS handling rule corresponding to the second DNS configuration.

9. The method according to claim 8, wherein receiving the feedback information comprises:
receiving a PDU session context update request message carrying the feedback information.

10. A DNS configuration processing method, performed by a base station, the method comprising:
receiving feedback information from UE, wherein the feedback information indicates that the UE does not use a second DNS configuration, or the feedback information indicates whether the UE uses the second DNS configuration; and
sending the feedback information to an AMF, wherein the feedback information is used for the AMF to forward to an SMF, and is used for the SMF to determine to stop maintaining a DNS handling rule corresponding to the second DNS configuration.

11. The method according to claim 10, wherein receiving the feedback information from the UE comprises:
receiving a response message to a PDU session establishment accept message, the response message carrying the feedback information.

12. The method according to claim 11, wherein sending the feedback information to the AMF comprises:
sending an N2 PDU session response message carrying the feedback information to the AMF.

13. A DNS configuration processing method, performed by an AMF, the method comprising:
receiving feedback information which is from a UE and is forwarded by a base station; and
sending the feedback information to the AMF, wherein when the feedback information indicates that the UE does not use the second DNS configuration, the feedback information is used for the SMF to determine to stop maintaining a DNS handling rule corresponding to the second DNS configuration.

14. The method according to claim 13, wherein receiving the feedback information which is from the UE and is forwarded by the base station comprises:
receiving an N2 PDU session response message carrying the feedback information.

15. A DNS configuration processing apparatus, comprising:
a first determination module configured to determine a DNS configuration used by a UE based on a received first DNS configuration which is selected by a network device for the UE, if the UE is not configured with a second DNS configuration which satisfies a preset condition.

16. The apparatus according to claim 15, wherein the first determination module is configured to:
when the first DNS configuration does not satisfy the preset condition, determine to use the second DNS configuration; or
when the first DNS configuration satisfies the preset condition, determine to use the first DNS configuration.

17. The apparatus according to claim 16, wherein the first DNS configuration satisfying the preset condition comprises at least one of the following:
the first DNS configuration being a private DNS configuration of the UE; or
the first DNS configuration being a DNS configuration of an application program, and the first DNS configuration being a DNS configuration which is not allowed to be overridden.

18. The apparatus according to claim 17, wherein the first DNS configuration being the DNS configuration which is not allowed to be overridden comprises:
the application program indicating that the first DNS configuration is the DNS configuration which is not allowed to be overridden; or
the application not indicating that the first DNS configuration is a DNS configuration which is allowed to be overridden.

19. The apparatus according to any one of claims 16 to 18, further comprising:
a first sending module configured to, when a DNS server for the UE is determined according to the first DNS configuration, send feedback information to a network side, wherein the feedback information indicates that the UE does not use the second DNS configuration, or the feedback information indicates whether the UE uses the second DNS configuration.

20. The apparatus according to claim 19, wherein the sending module is configured to:
when the DNS server for the UE is determined according to a private DNS configuration of the UE, send the feedback information to the network side.

21. The apparatus according to any one of claims 16 to 20, wherein the second DNS configuration comprises:
address information of an Edge Application Server Discovery Function (EASDF) selected by an SMF for the UE.

22. A DNS configuration processing apparatus, comprising:
a second determination module configured to determine a second DNS configuration;
a second sending module configured to send the second DNS configuration to UE, wherein the second DNS configuration is used for the UE to obtain a DNS service;
a second receiving module configured to receive feedback information; and
a stopping module configured to, when the feedback information indicates that the UE does not use the second DNS configuration, stop maintaining of a DNS handling rule corresponding to the second DNS configuration.

23. The apparatus according to claim 22, wherein the second receiving module is configured to:
receive a PDU session context update request message carrying the feedback information.

24. A DNS configuration processing apparatus, comprising:
a third receiving module configured to receive feedback information from UE, wherein the feedback information indicates that the UE does not use a second DNS configuration, or the feedback information indicates whether the UE uses the second DNS configuration; and
a third sending module configured to send the feedback information to an AMF, wherein the feedback information is used for the AMF to forward to an SMF, and is used for the SMF to determine to stop maintaining a DNS handling rule corresponding to the second DNS configuration.

25. The apparatus according to claim 24, wherein the third receiving module is configured to:
receive a response message for a PDU session establishment accept message, the response message carrying the feedback information.

26. The apparatus according to claim 25, wherein the third sending module is configured to:
send an N2 PDU session response message carrying the feedback information to the AMF.

27. A DNS configuration processing apparatus, comprising:
a fourth receiving module configured to receive feedback information which is from a UE and is forwarded by a base station; and
a fourth sending module configured to send the feedback information to the AMF, wherein when the feedback information indicates that the UE does not use the second DNS configuration, the feedback information is used for the SMF to determine to stop maintaining a DNS handling rule corresponding to the second DNS configuration.

28. The apparatus according to claim 27, wherein the fourth receiving module is configured to:
receive an N2 PDU session response message carrying the feedback information.

29. A communication device, comprising: a processor, a transceiver, a memory and an executable program stored in the memory and configured to be run by the processor, wherein when the processor runs the executable program, the method according to any one of claims 1 to 7, 8 to 9, 10 to 12, or 13 to 14 is implemented.

30. A computer storage medium that stores an executable program, wherein after the executable program is executed by a processor, the method according to any one of claims 1 to 7, 8 to 9, 10 to 12, or 13 to 14 is implemented.
